# EUROPEAN PATENT APPLICATION

(11) **EP 4 668 082 A1**
(43) Date of publication of application: **24.12.2025**
(21) Application number: 24756282.0
(22) Date of filing: 08.02.2024
(51) Int. Cl.: G06F 3/0481

(54) **TARGET CONTENT DISPLAY METHOD AND APPARATUS, INTERFACE DISPLAY METHOD AND APPARATUS, DEVICE, AND STORAGE MEDIUM**

(30) Priority: 17.02.2023 CN 202310184274
(71) Applicant: Beijing Zitiao Network Technology Co., Ltd., Beijing 100190 (CN)
(72) Inventor: XU, Shan, Beijing 100028 (CN); XUAN, Yueyang, Beijing 100028 (CN); WANG, Yingke, Beijing 100028 (CN); FENG, Zhongchenhao, Beijing 100028 (CN); ZHANG, Yu, Beijing 100028 (CN); CHEN, Ziqian, Beijing 100028 (CN); LI, Fanming, Beijing 100028 (CN)
(74) Representative: Isarpatent
(86) International application number: PCT/CN2024/076868
(87) International publication number: WO 2024/169909

(57) **Abstract**

Embodiments of the present disclosure provide a target content display method and apparatus, an interface display method and apparatus, a device, and a storage medium. The target content display method comprises: displaying a theme interface of a target theme, and displaying at least one associated user identifier of the target theme in the theme interface, wherein the associated user identifier comprises a target user identifier, at least part of an associated area of the target user identifier displays target content of a corresponding target user, and the target content comprises at least part of information content of target posted information corresponding to the target user and/or first interaction information of the target posted information; and in response to a first trigger operation acting in the theme interface, adjusting the size range of the associated area, and adjusting the quantity of target content displayed in the associated area and/or the display form of the target content.

## Description

### CROSS-REFERENCE TO RELATED APPLICATIONS

The present application is based on and claims priority to China Patent Application No. 202310184274.X filed on February 17, 2023, the disclosure of which is incorporated by reference herein in its entirety.

### TECHNICAL FIELD

Embodiments of the present disclosure relate to the field of computer technology, particularly to a display method of target content, a display method of an interface, an apparatus, a device, and a storage medium.

### BACKGROUND

Currently, in some applications, a user can enter a topic interface of a particular topic by performing a preset trigger operation to view discussions on that topic by other users in the topic interface. However, in the related art, the way to enter a topic interface and to perform interface interaction is relatively simple.

### SUMMARY

Embodiments of the present disclosure provide a display method of target content, a display method of an interface, an apparatus, a device and a storage medium for enhancing the way of interaction in a topic interface and/or the way of entering a topic interface.

In a first aspect, an embodiment of the present disclosure provides a display method of target content, comprising: displaying a topic interface of a target topic and displaying at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or first interaction information of the target post information; and in response to a first trigger operation applied in the topic interface, adjusting a size range of the associated area and adjusting a number of the target content item displayed in the associated area and/or a display form of the target content item.

In a second aspect, an embodiment of the present disclosure further provides a display method of an interface, comprising: receiving an interface display operation for a preset interface; and displaying the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

In a third aspect, an embodiment of the present disclosure further provides a display apparatus of target content, comprising: a topic interface display module configured to display a topic interface of a target topic and display at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or interaction information of the target post information; and an adjustment module configured to, in response to a first trigger operation applied in the topic interface, adjust a size range of the associated area and adjust a number of the target content item displayed in the associated area and/or a display form of the target content item.

In a fourth aspect, an embodiment of the present disclosure further provides a display apparatus of an interface, comprising: an operation receiving module configured to receive an interface display operation for a preset interface; and a preset interface display module configured to display the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

In a fifth aspect, an embodiment of the present disclosure further provides an electronic device, comprising: one or more processors; and a memory for storing one or more programs that, when executed by the one or more processors, cause the one or more processors to implement the display method of the target content or the display method of the interface according to the embodiments of the present disclosure.

In a sixth aspect, an embodiment of the present disclosure further provides a computer-readable storage medium having stored thereon computer instructions that, when executed by a processor, implement the display method of the target content or the display method of the interface according to the embodiments of the present disclosure.

In a seventh aspect, an embodiment of the present disclosure further provides a computer program, comprising: instructions that, when executed by a processor, implement the display method of the target content or the display method of the interface according to the embodiments of the present disclosure.

In an eighth aspect, an embodiment of the present disclosure further provides a computer program product comprising instructions that, when executed by a processor, implement the display method of the target content or the display method of the interface according to the embodiments of the present disclosure.

Embodiments of the present disclosure provide a display method of target content, a display method of an interface, an apparatus, a device and a storage medium. The display method of the target content comprises: displaying a topic interface of a target topic and displaying at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or first interaction information of the target post information; and in response to a first trigger operation applied in the topic interface, adjusting a size range of the associated area and adjusting a number of the target content item displayed in the associated area and/or a display form of the target content item. The display method of an interface comprises: receiving an interface display operation for a preset interface; and displaying the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

### BRIEF DESCRIPTION OF THE DRAWINGS

The above and other features, advantages, and aspects of the embodiments of the present disclosure will become more apparent from the following embodiments with reference to the drawings. Throughout the drawings, the same or similar reference signs indicate the same or similar elements. It should be understood that the drawings are schematic and the components and elements are not necessarily drawn to scale.
FIG. 1 is a flowchart of a display method of target content provided in an embodiment of the present disclosure;
FIG. 2 is a schematic display diagram of a topic interface provided in an embodiment of the present disclosure;
FIG. 3 is a schematic display diagram of another topic interface provided in an embodiment of the present disclosure;
FIG. 4 is a schematic display diagram of still another topic interface provided in an embodiment of the present disclosure;
FIG. 5 is a schematic display diagram of an information generation area provided in an embodiment of the present disclosure;
FIG. 6 is a flowchart of another display method of target content provided in an embodiment of the present disclosure;
FIG. 7 is a schematic display diagram of a preset details interface provided in an embodiment of the present disclosure;
FIG. 8 is a flowchart of a display method of an interface provided in an embodiment of the present disclosure;
FIG. 9 is a schematic display diagram of a preset interface provided in an embodiment of the present disclosure;
FIG. 10 is a block diagram of a display apparatus of target content provided in an embodiment of the present disclosure;
FIG. 11 is a block diagram of a display apparatus of an interface provided in an embodiment of the present disclosure;
FIG. 12 is a schematic structure diagram of an electronic device provided in an embodiment of the present disclosure.

### DETAILED DESCRIPTION

Exemplary embodiments of the present disclosure will be described in detail below with reference to the accompanying drawings. Although some embodiments of the present disclosure are shown in the accompanying drawings, it should be understood that the present disclosure can be implemented in various forms, and should not be construed as being limited to the embodiments set forth herein. On the contrary, these embodiments are provided for a more thorough and complete understanding of the present disclosure. It should be understood that the drawings and embodiments of the present disclosure are only used for exemplary purposes, and are not used to limit the scope of protection of the present disclosure.

It should be understood that the various steps described in the methods of the embodiments of the present disclosure may be executed in a different order, and/or executed in parallel. In addition, the methods may comprise additional steps and/or some of the illustrated steps may be omitted. The scope of the present disclosure is not limited in this regard.

The term "comprising" and its variants as used herein is an open-ended mode expression, that is, "comprising but not limited to". The term "based on" means "based at least in part on". The term "one embodiment" means "at least one embodiment"; the term "another embodiment" means "at least one additional embodiment"; and the term "some embodiments" means "at least some embodiments". Related definitions of other terms will be given in the following description.

It should be noted that the concepts of "first", "second" and the like mentioned in the present disclosure are only used to distinguish different devices, modules or units, and are not used to limit the order of functions performed by these devices, modules or units, or interdependence therebetween.

It should be noted that the modifications of "a" and "a plurality of" mentioned in the present disclosure are illustrative and not restrictive, and those skilled in the art should understand that unless clearly indicated in the context, they should be understood as "one or more".

The names of messages or information exchanged between multiple devices in the embodiments of the present disclosure are only used for illustrative purposes, and are not used to limit the scope of these messages or information.

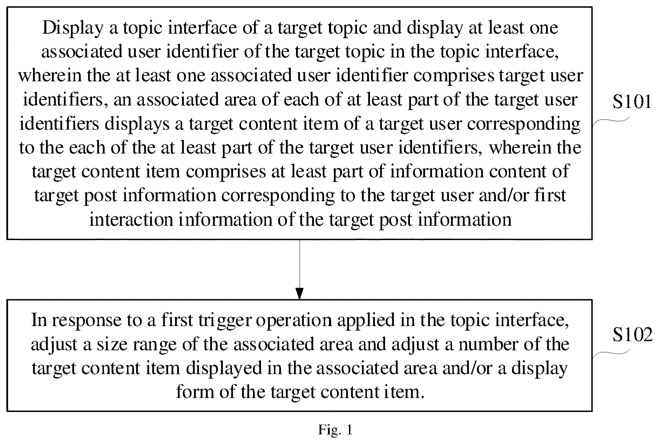

FIG. 1 is a flowchart of a display method of target content provided in an embodiment of the present disclosure. The method can be performed by a display apparatus of target content, wherein the apparatus can be implemented in the form of software and/or hardware, and provided in an electronic device, such as a mobile phone or a tablet computer. The display method of target content provided in the embodiment of the present disclosure is applicable to the scenario of adjusting a target content item displayed within a topic interface. As shown in FIG. 1, the display method of target content provided in the embodiment of the present disclosure may comprise the following steps.

In step S101, a topic interface of a target topic is displayed and at least one associated user identifier of the target topic is displayed in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or first interaction information of the target post information.

The topic interface may be an interface used to display an associated user identifier of a corresponding topic, in which at least one associated user identifier of the corresponding topic can be displayed. The target topic may be a topic corresponding to a currently displayed topic interface, and can be understood as a topic for a user to post information, such as a message topic. For example, the topic may be a topic, such as a topic of interest for users to discuss, that can be preset or created by a user in a current application.

The associated user identifier can be understood as a user identifier of an associated user. The associated user of the target topic can be understood as a user who is associated with the target topic, wherein the associated user may comprise a target user. In this case, the associated user identifier can comprise a target user identifier. In some embodiments, the associated user identifier further comprise a current user identifier, wherein the current user identifier is a user identifier of a current user. The target user may be a user who have a left message or performed an interaction under the target topic. The current user can be a user currently viewing the topic interface of the target topic. The target user identifier can be considered as a user identifier of a target user. The current user identifier can be considered as a user identifier of the current user. The preset layout can be considered as a preset arrangement of an associated user identifier of the target topic in the topic interface of the target topic, wherein the preset layout can be set as needed. For example, the preset layout can be a horizontal layout, a vertical layout, or a dot matrix layout, etc. In some embodiments, the preset layout may be a dot matrix layout to further enrich the arrangement of user identifiers.

In this embodiment, the associated user identifier can be a dynamic identifier or a static identifier. In some embodiments, the associated user identifier is a dynamic identifier, and an action performed by the dynamic identifier corresponds to first status information of a corresponding associated user. For example, the associated user identifier of a certain associated user can be a dynamic identifier that can perform an action corresponding to first status information of the associated user. For example, the dynamic identifier can be a dynamic head portrait formed based on a virtual character of the corresponding associated user, and the virtual character of the associated user can perform an action corresponding to the first status information in the dynamic head portrait. Thus, the first status information of the corresponding associated user can be quickly determined based on the associated user identifier. The first status information can be status information of a preset status, such as the latest expressing status information set or selected by the associated user under the target topic. The expressing can be, for example, happy, sad, like, and so on.

The associated area of the target user identifier may be an area associated with the target user identifier, wherein the associated area can be configured to display a target content item of a corresponding target user. The target content item of a certain target user may comprise at least part of information content of target post information corresponding to the target user and/or interaction information of the target post information. The target post information can be post information posted by the target user under the target topic, such as the latest post information posted by the target user under the target topic. The post information may comprise, for example, message information, picture information, and/or work information, etc. A description will be given below with message information as an example. The first interaction information of the target post information may be information interacting with the target post information, wherein the first interaction information can comprise text interaction information and/or emoji interaction information. For example, the first interaction information of the target post information may be emoji interaction information of the target post information, such as emoji information or quantity information of the largest number of interaction emojis received for the target post information.

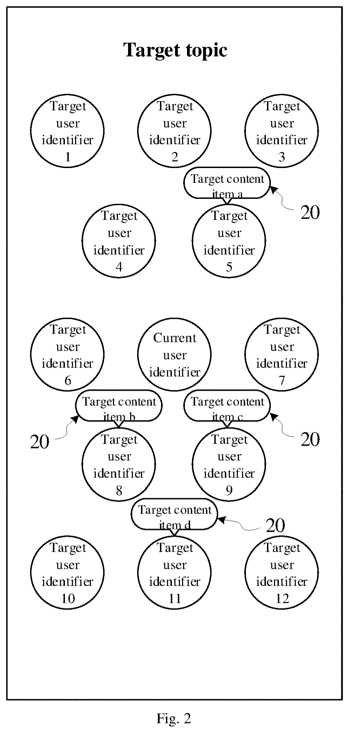

In the embodiment, a topic interface of a target topic can be displayed, and at least one associated user identifier of the target topic, comprising a target user identifier, can be displayed in the topic interface in a preset way. Further, target content items of corresponding target users can be displayed in the associated areas 20 of at least part of target user identifiers. As shown in FIG. 2, at least part of information content items of the target post information posted by corresponding target users under the target topic and/or first interaction information (not shown in FIG. 2) of the target post information can be displayed in the associated areas 20 of at least part of target user identifiers.

In step S102, in response to a first trigger operation applied in the topic interface, a size range of the associated area is adjusted and a number of the target content item displayed in the associated area and/or a display form of the target content item are adjusted.

The first trigger operation may be a trigger operation that instructs the adjustment of the size range of the associated area used to display the target content item, such as a multi-finger zoom operation applied within the topic interface. The number of the target content item displayed in the associated area can be the number of a target post information item displayed in the associated area and/or the number of a content item of the target post information displayed in the associated area. The display form of the target content item may be, for example, whether to display the target post information, such as displaying the target post information in the associated area or not displaying the target post information in the associated area.

The embodiment allows the user to adjust the size range of the associated area and the number and/or display form of the target content item displayed in the associated area, thus enriching the interaction way of the topic interface.

Specifically, when the first trigger operation is received, the size range of the associated area in the topic interface can be adjusted based on the first trigger operation, and the number and/or display form of the target content item displayed in the associated area can be adjusted.

For example, when the first trigger operation is a trigger operation to increase the associated area, the size range of the associated area in the preset interface can be increased, and the information content of the target post information displayed in the associated area can be increased and/or the target content item can be adjusted from a form in which no target post information is displayed to a form in which the target post information is displayed. For example, during the execution of the first trigger operation, the size range of the associated area in the topic interface can be gradually increased. If no target post information is displayed (for example, only first interaction information of the target post information is displayed) in the associated area before the first trigger operation is executed, the target content item can be switched from a form in which no target post information is displayed to a form in which at least part of the information content of the target post information is displayed, and the information content of the target post information displayed in the associated area can be increased as the execution of the first trigger operation continues. If a target post information is displayed (for example, at least part of the target post information and the first interaction information are displayed) in the associated area before the first trigger operation is executed, the information content of the target post information displayed in the associated area may be gradually increased as the first trigger operation is executed to facilitate the user's viewing of the information content of the target post information.

When the first trigger operation is a trigger operation to reduce the associated area, the size range of the associated area in the preset interface can be increased, and the information content of the target post information displayed in the associated area can be decreased and/or the target content item can be adjusted from a form in which the target post information is displayed to a form in which no target post information is displayed. For example, during the execution of the first trigger operation, the size range of the associated area can be gradually reduced, and the information content of the target post information displayed in the associated area can be gradually decreased. When the information content of the target post information displayed in the associated area is decreased to a certain extent (such as when there is only one character remains), as the execution of the first trigger operation continues, the display of the information content of the target post information in the associated area can be canceled (i.e. only first interaction information of the target post information is displayed) to reduce the area occupied by the target content item in the topic interface.

**In** the embodiment, the size of the associated user identifier in the topic interface can be adjusted or not adjusted upon receiving the first trigger operation. In some embodiments, the size of the associated user identifier can be adjusted to meet different needs of users to view more information content of the target post information and/or view more user identifiers. In this case, the adjusting of the size range of the associated area and the adjusting the number of the target content item displayed in the associated area and/or the display form of the target content item comprise: adjusting a size of an associated user identifier and the size range of the associated area, and adjusting a number of a target posted content item displayed in the associated area and/or the display form of the target content item according to the size range of the associated area.

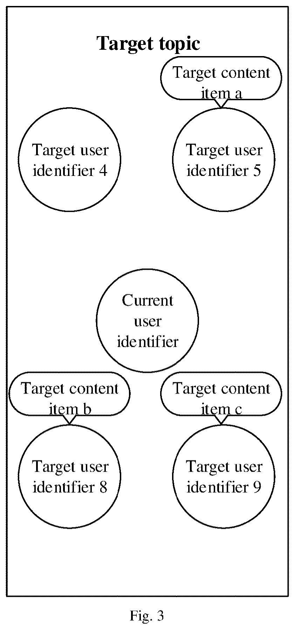

For example, when a first trigger operation to increase the size range of the associated area is received, the size of the associated user identifier and the size range of the associated area in the topic interface can be increased, as shown in FIG. 3. Based on the size range of the associated area, the target content item can be switched from a form in which no target post information is displayed to a form in which the target post information is displayed and/or the information content of the target post information displayed in the associated area is increased. The size of the target content item (such as the font size of characters or the size of emoji interaction information) may remain unchanged or the increase of the size of the target content item may be less than the increase in the size range of the associated area.

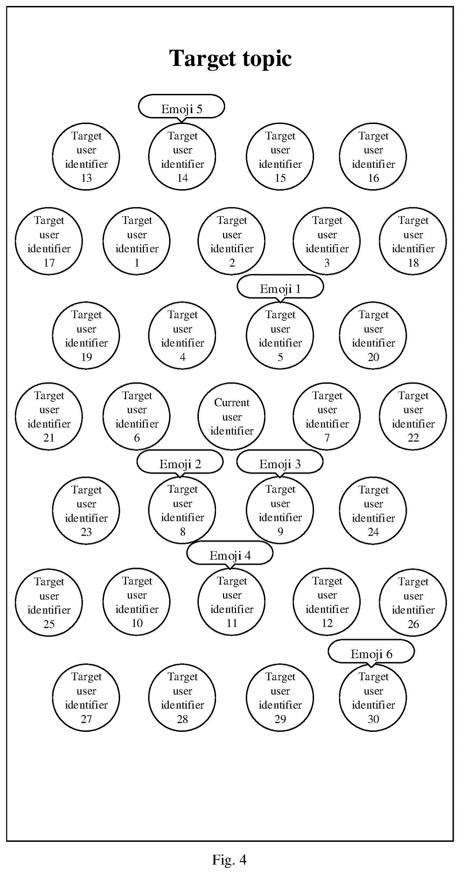

When a first trigger operation to reduce the size range of the associated area is received, the size of the associated user identifier and the size range of the associated area in the topic interface can be decreased, as shown in FIG. 4. Based on the size range of the associated area, the information content of the target post information displayed in the associated area can be reduced and/or the target content item can be switched from a form in which the target post information is displayed to a form in which no target post information is displayed. As shown in FIG. 4, the target content item in a bubble (i.e. the associated area) is switched from a form in which the target post information is displayed to a form in which first interaction information of the target post information (such as emoji 1, emoji 2, etc. shown in FIG. 4) is displayed. The size of the target content item (such as the font size of characters or the size of emoji interaction information) may remain unchanged or the reduction in the size of the target content item may be less than the reduction in the size range of the associated area.

In some embodiments, after the at least one associated user identifier of the target topic is displayed in the topic interface, the method further comprises: displaying a post information generation area in response to a third trigger operation for the current user identifier, wherein the post information generation area is configured for the current user to generate post information for the target topic; and posting the post information generated in the information input area under the target topic in response to an information posting operation.

The third trigger operation may be a trigger operation that instructs the display of the post information generation area for the current user to generate post information under the target topic, such as a trigger operation of clicking on the current user identifier displayed in the preset interface. The post information generation area is an area that can be configured to generate post information of the current user under the target topic. The information posting operation can be a trigger operation that instructs the post information generated by the current user to be posted under the target topic, such as an operation to trigger a posting control.

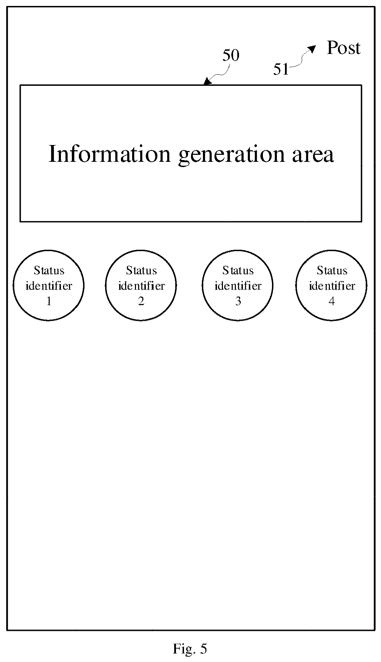

Specifically, as shown in FIG. 5, when a third trigger operation for the current user identifier displayed in the topic interface is received, a post information generation area 50 may be displayed, in response to the third trigger operation, for the current user to generate post information for the target topic, such as for the current user to input information content of post information for the target topic. When the information posting operation is received, for example, when it is detected that the posting control 51 has been triggered by the current user, the post information generated in the post information generation area 50 is posted under the target topic.

In addition, as shown in FIG. 5, when the post information generation area is displayed, at least one status identifier can be further displayed for the current user to set first status information when posting the post information under the target topic. Different status identifiers can correspond to different status information. Taking the expressing status as an example, different status identifiers can correspond to different expressing status information. Therefore, after the current user triggers a certain status identifier and posts the generated post information, the first status information can be set to be the status information corresponding to the status identifier, and an action performed by the current user identifier can be further adjusted to be an action corresponding to the first status information (for the case where the current user identifier is a dynamic identifier).

In some embodiments, after displaying the topic interface of the target topic, the method further comprises: in response to an attribute switching operation for the current user identifier, switching the current user identifier from a non-public status to a public status, or switching the current user identifier from a public status to a non-public status.

The attribute switching operation may be a trigger operation that instructs switching the attribute of the current user identifier displayed in the topic interface, such as a trigger operation that instructs switching the current user identifier from a non-public status to a public status, or a trigger operation that instructs switching the current user identifier from a public status to a non-public status.

The non-public status can be understood as the current user's user identifier in the current application being in a non-public status under the target topic, such as an anonymous status. In this case, the current user identifier displayed in the topic interface can be an anonymous identifier of the current user, wherein the anonymous identifier can be generated when displaying the topic interface of the target topic. If the current user identifier is in the non-public status, the current user can post information under the target topic in a first manner, such as posting information in an anonymous manner.

The public status can be understood as the current user's user identifier in the current application being in a public status under the target topic, such as a non-anonymous status. In this case, the current user identifier displayed in the topic interface can be the user identifier of the current user in the current application. If the current user identifier is in the public status, the current user can post information under the target topic in a second manner, such as posting information in a non-anonymous manner.

In the above embodiment, the user can set the attribute of his/her own current user identifier displayed in the topic interface. For example, the current user identifier can be switched from a non-public status to a public status, or the current user identifier can be switched from a public status to a non-public status. Therefore, the current user can post information under the target topic with a non-public/public user identifier.

The display method of target content provided by the embodiment comprises: displaying a topic interface of a target topic and displaying at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or first interaction information of the target post information; and in response to a first trigger operation applied in the topic interface, adjusting a size range of the associated area and adjusting a number of the target content item displayed in the associated area and/or a display form of the target content item. In the above technical solution of the embodiment, the size range of the associated area and the number and/or display form of the target content item displayed in the associated area are adjusted based on the trigger operation of the user so as to enrich the interaction way of the topic interface, enrich the display way of the target content, and meet the different viewing requirements of users.

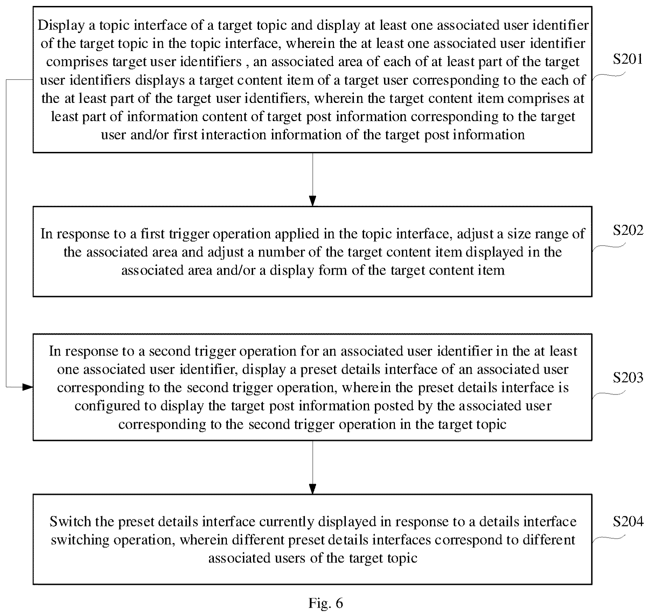

FIG. 6 is a flowchart of another display method of target content provided in an embodiment of the present disclosure. The solution in the embodiment can be combined with one or more optional solutions in the above embodiments. In some embodiments, after the at least one associated user identifier of the target topic is displayed in the topic interface, the method further comprises: in response to a second trigger operation for an associated user identifier in the at least one associated user identifier, displaying a preset details interface of an associated user corresponding to the second trigger operation, wherein the preset details interface is configured to display the target post information posted by the associated user corresponding to the second trigger operation in the target topic.

In some embodiments, after the preset details interface of the target user corresponding to the second trigger operation is displayed, the method further comprises: switching the preset details interface currently displayed in response to a details interface switching operation, wherein different preset details interfaces correspond to different associated users of the target topic.

Correspondingly, as shown in FIG. 6, the display method of target content provided in the embodiment may comprise the following steps.

In step S201, a topic interface of a target topic is displayed and at least one associated user identifier of the target topic is displayed in the topic interface, and step S202 or S203 is executed, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or first interaction information of the target post information.

In step S202, in response to a first trigger operation applied in the topic interface, a size range of the associated area is adjusted and a number of the target content item displayed in the associated area and/or a display form of the target content item are adjusted.

In step S203, in response to a second trigger operation for the associated user identifier, a preset details interface of an associated user corresponding to the second trigger operation is displayed, wherein the preset details interface is configured to display the target post information posted by the associated user corresponding to the second trigger operation in the target topic.

The second trigger operation may be a trigger operation that instructs the display of a preset details interface for a certain associated user, such as an operation of triggering an associated user identifier corresponding to a certain associated user displayed in the topic interface.

The preset details interface can be an interface for displaying an interface of the target post information posted by a corresponding associated user in the target topic, that is, an interface for displaying detailed information of the target post information. In some embodiments, the preset details interface is further configured to display an associated user list of the target topic and/or second interaction information of the target post information. In addition, the preset details interface can further display emoji information of interaction emojis received for the target post information of the corresponding associated user, such as the number information of each interaction emoji received for the target post information.

The associated user list may be a list of associated users of the target topic, and the associated user list may or may not comprise the current user. For example, the associated user list can be configured to display at least one associated user identifier of the target topic, wherein the at least one associated user identifier may or may not comprise the current user identifier. The second interaction information of the target post information may be interaction information of the target post information. In some embodiments, the second interaction information of the target post information comprises textual interaction information and/or emoji interaction information for the target post information. The way of displaying the second interaction information in the preset details interface is not limited. For example, the second interaction information of the currently displayed target post information can be displayed in the form of a barrage in the preset details interface or in a specified area of the preset details interface.

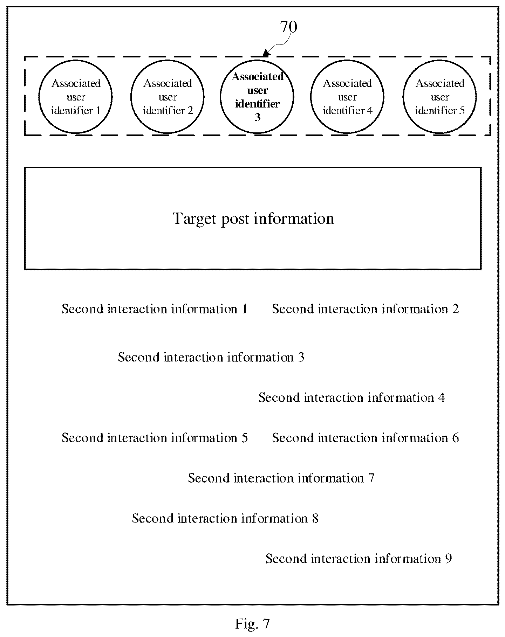

Specifically, when a second trigger operation is received for a certain associated user identifier, for example, when it is detected that the current user has triggered a certain associated user identifier displayed in the topic interface in a preset triggering manner, the current interface can be switched from the topic interface of the target topic to the preset details interface of the associated user corresponding to the associated user identifier, wherein the target post information of the associated user is displayed in the preset details interface, and an associated user list 70 of the target topic and/or second interaction information of the target post information can be further displayed in the preset details interface, as shown in FIG. 7.

For example, when a second trigger operation for an associated user identifier of an associated user A is received, a preset details interface of the associated user A can be displayed, wherein target post information K of the associated user A is displayed in the preset details interface and an associated user list of the target topic and/or second interaction information of the target post information K can be further displayed in the preset details interface.

In step S204, the currently displayed preset details interface is switched in response to a details interface switching operation, wherein different preset details interfaces correspond to different associated users of the target topic.

The details interface switching operation can be a trigger operation that instructs the switching of the currently displayed preset details interface, such as a preset interaction operation (such as a horizontal sliding operation) or other preset gesture operation that is applied within the currently displayed preset details interface.

In the embodiment, when a details interface switching operation is received, the currently displayed preset details interface can be switched. For example, the currently displayed preset details interface is switched according to the arrangement order of associated users in the associated user list of the target topic.

As shown in FIG. 7, taking an example in which the details interface switching operation is a horizontal sliding operation, and a preset details interface 3 of an associated user corresponding to an associated user identifier 3 is currently displayed, when a right sliding operation of the current user is detected in the preset details interface 3, the current interface can be switched to a preset details interface 2 of an associated user corresponding to an associated user identifier 2, wherein the target post information of the associated user corresponding to the associated user identifier 2 under the target topic is displayed in the preset details interface 2, and an associated user list of the target topic and/or second interaction information of the target post information currently displayed in the preset details interface 2 can also be displayed can be further displayed in the preset details interface 2; when a left sliding operation of the current user is detected in the preset details interface 3, the current interface can be switched to a preset details interface 4 of an associated user corresponding to an associated user identifier 4, wherein the target post information of the associated user corresponding to the associated user identifier 4 under the target topic is displayed in the preset details interface 4, and an associated user list of the target topic and/or second interaction information of the target post information currently displayed in the preset details interface 4 can be further displayed in the preset details interface 4.

In the technical solution of the embodiment, a preset details interface of an associated user can be displayed for the current user, and the target post information of the corresponding associated user is displayed in the preset details interface, which can further enrich the interaction way of the topic interface and the display way of the post information, thereby improving the interaction effect.

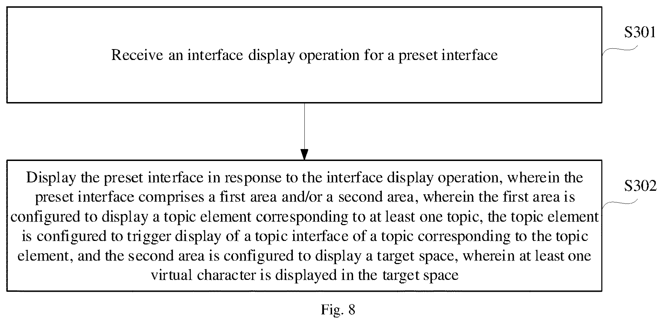

FIG. 8 is a flowchart of a display method of an interface provided in an embodiment of the present disclosure. The method can be performed by an display apparatus of the interface, which can be implemented in software and/or hardware, and can be provided in an electronic device, such as a mobile phone or a tablet computer. The display method of the interface provided in the embodiment of the present disclosure is applicable to the scenario of displaying a topic element and/or a virtual character. As shown in FIG. 8, the display method of the interface provided in the embodiment may comprise the following steps.

In step S301, an interface display operation for a preset interface is received.

The interface display operation may be a trigger operation that instructs the display of a preset interface, such as a trigger operation that triggers a preset control or other gesture operation. The embodiment has no limitation as to the interface on which the interface display operation is performed. In some embodiments, the interface display operation is applied in a personal interface of the current user. For example, the current user can perform an interface display operation for a preset interface by performing a preset sliding operation within the personal interface of the current user. The preset sliding operation may be a preset sliding down operation, such as a preset sliding down operation that starts from a certain area of the personal interface.

In the embodiment, the current user can perform an interface display operation for a preset interface when the current user wants to view the preset interface. Correspondingly, the current application can receive the interface display operation performed by the current user.

In step S302, the preset interface is displayed in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

The first area may be an area for displaying a topic element, and the second area may be an area for displaying a target space.

At least one topic element, which is a visual element corresponding to a topic, can be displayed in the first area. This embodiment has no limitations on the display style of the topic elements. The topic elements corresponding to different topics can have the same or different display styles in the preset interface. In some embodiments, topic elements corresponding to different topics have different display styles, and/or topic elements corresponding to different types of topics have different display styles. Thus, by the display style of a topic element, the topic/topic category corresponding to the display style can be represented. In some implementations, the topic may be a topic that supports a user to post information using a non-public user identifier, such as a topic that supports a user to post information using an anonymous way.

The second area may display at least one virtual character, wherein the at least one virtual character may comprise a virtual character of the current user and/or a virtual character of an associated user of the current user. The associated user may be a user who has a preset association relationship with the current user, such as a friend. The virtual character of the associated user displayed in the target space can be set by the current user. The virtual characters can have the same or different poses in the target space. In some embodiments, the at least one virtual character presents a pose corresponding to second status information of a user corresponding to the at least one virtual character in the target space. The second status information may be, for example, certain status information of the corresponding user in the current application, such as the latest expressing status information of the corresponding user in the current application. The second status information may be the same as or different from the first status information of the corresponding user under the target topic.

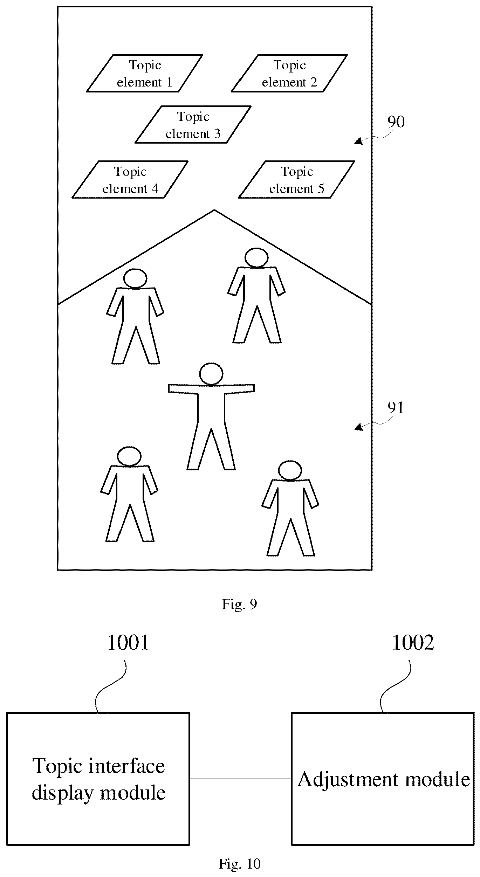

For example, when an interface display operation for a preset interface is received, the preset interface can be displayed in response to the interface display operation, and a topic element corresponding to at least one topic can be displayed in a first area 90 of the preset interface, and/or, a target space is displayed in a second area 91 of the preset interface, with at least one virtual character displayed in the target space, as shown in FIG. 9 (with the first area and the second area comprised in the preset interface shown in FIG. 9 as an example).

In some embodiments, after a topic element corresponding to at least one topic is displayed in the first area, the current user can switch the topic element(s) displayed in the first area by performing a topic element switching operation in the first area. The topic element switching operation may be a trigger operation that instructs the switching of at least part of topic elements displayed in the first area, such as an operation of sliding horizontally in the first area or an operation of triggering a control used to switch the topic elements displayed in the first area.

In some embodiments, the current user can trigger any topic element displayed in the first area to instruct the current application to display a topic interface corresponding to the topic element. For example, when the current application detects that the current user triggers a certain topic element displayed in the first area, a topic corresponding to the topic element can be used as a target topic and a topic interface of the target topic is displayed. For the content displayed in the topic interface of the target topic and the specific interaction way of the topic interface of the target topic, reference can be made to the relevant discussion in the display method of the target content described above, which will not be repeated here.

In the embodiment, the current user can manage virtual characters displayed in the target space, for example, manage the virtual characters of associated users located in the target space. In this situation, in some embodiments, the display method of the interface provided by the embodiment further comprises at least one of: adding a virtual character of a first user to the target space in response to a virtual character addition operation, wherein the first user is a user corresponding to the virtual character addition operation; or removing a virtual character of a second user from the target space in response to a virtual character removal operation, wherein the second user is a user corresponding to the virtual character removal operation.

The virtual character addition operation may be a trigger operation that instructs the addition of a virtual character of a certain user to the target space, such as a trigger operation to trigger an addition control corresponding to a certain user in the associated user list. The addition control is displayed when a virtual character of a corresponding user is not located in the target space. The virtual character removal operation may be a trigger operation that instruct the removal of a virtual character of a certain user from the target space, such as a trigger operation to trigger a removal control corresponding to a certain user in the associated user list. The removal control can be displayed when the virtual character of a corresponding user (such as a corresponding associated user) is located in the target space. The associated user list may be displayed based on an associated user list display operation performed by the user, wherein the associated user list display operation may be applied in a preset interface, such as to an associated user list display control displayed in the preset interface. The first user may be a user corresponding to the virtual character addition operation, the second user may be a user corresponding to the virtual character removal operation, and the first user and the second user can be the same or different users.

For example, when a virtual character addition operation is received, a first user corresponding to the virtual character addition operation can be determined, and a virtual character of the first user can be added to the target space, i.e., the virtual character of the first user can be displayed in the target space; when a virtual character removal operation is received, a second user corresponding to the virtual character removal operation can be determined, and a virtual character of the second user can be removed from the target space, i.e., the virtual character of the second user can be canceled from being displayed in the target space.

In some embodiments, after displaying the preset interface, the display method further comprises at least one of: sending preset chat information to a third user corresponding to a first virtual character in response to a chat operation for the first virtual character; generating target media content in response to a media content generation operation for a second virtual character, wherein the target media content displays an image of the second virtual character; setting a virtual character of the current user to have same target attribute information as a third virtual character in response to an attribute copying operation for a preset attribute of the third virtual character, wherein the target attribute information is attribute information of the preset attribute and comprises clothing information; or saving target attribute information of a fourth virtual character in response to an attribute saving operation for a preset attribute of the fourth virtual character, wherein the fourth virtual character is a virtual character of the associated user.

The chat operation may be a trigger operation that instructs the sending of preset chat information to a user corresponding to a certain virtual character in the target space, such as an operation to trigger a preset chat control corresponding to a certain virtual character. The media content generation operation may be an operation that instructs to generate a media content using a certain virtual character in the target space, such as an operation to trigger a media content generation control corresponding to a certain virtual character. The attribute copying operation may be an operation that instructs to set the virtual character of the current user to have the same preset attribute as a certain virtual character, such as an operation to trigger a copying control corresponding to a certain virtual character. The attribute saving operation may be a trigger operation that instructs to save attribute information of a preset attribute of a certain virtual character in the target space, such as an operation to trigger a saving control corresponding to a certain virtual character in the target space. The preset chat control, media content generation control, copying control, and/or saving control corresponding to a virtual character in the target space can be constantly displayed in the preset interface, or can be displayed in response to the current user's trigger operation on a corresponding virtual character, which can be set according to actual needs.

The first virtual character may be a virtual character corresponding to a received chat operation in the target space, the second virtual character may be a virtual character corresponding to a received media content generation operation in the target space, the third virtual character may be a virtual character corresponding to a received attribute copying operation in the target space, and the fourth virtual character may be a virtual character corresponding to a received attribute saving operation in the target space. The first virtual character, the second virtual character, the third virtual character, and the fourth virtual character can be the same or different virtual characters.

The third user can be understood as a user corresponding to the first virtual character. The preset chat information can be set as needed, and the information content of the preset chat information is not specifically limited in the embodiment. The target media content may be a media content generated based on the second virtual character, and an image of the second virtual character can be displayed in the target media content. The target attribute information may be the attribute information of the preset attribute. Exemplarily, the preset attribute can comprise a dressing attribute, in which case, the target attribute information can comprise clothing information.

For example, when a chat operation for a first virtual character in the target space is received, the preset chat information can be sent to a third user corresponding to the first virtual character; when a media content generation operation for a second virtual character in the target space is received, a target media content that presents an image of the second virtual character can be generated; when an attribute copying operation for a preset attribute of a third virtual character in the target space is received, the current user's virtual character can be set to have the same target attribute information as the third virtual character; when an attribute saving operation for a preset attribute of a fourth virtual character is received, the target attribute information of the fourth virtual character can be saved, e.g., saving the target attribute information of the fourth virtual character to the current user's attribute information list for use by the current user's virtual character.

The display method of the interface provided in the embodiment comprises: receiving an interface display operation for a preset interface; and displaying the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user. In the embodiment, by adopting the above technical solution, at least one topic element configured for triggering entry into a topic interface of a corresponding topic is displayed in the first area of the preset interface, and/or the target space is displayed in the second area of the preset interface, which not only enriches the way of entering a topic interface, but also enriches the way of displaying topics and virtual characters, thereby providing convenience for users to interact based on the virtual characters.

FIG. 10 is a block diagram of a display apparatus of target content provided in an embodiment of the present disclosure. The apparatus may be implemented in software and/or hardware, and may be provided in an electronic device, typically in a mobile phone or tablet computer, which is suitable for a scenario of adjusting a target content item displayed in a topic interface by performing the display method of the target content. As shown in FIG. 10, the display apparatus of target content provided in the embodiment may comprise a topic interface display module 1001 and an adjustment module 1002.
the topic interface display module 1001 is configured to display a topic interface of a target topic and display at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or interaction information of the target post information.
the adjustment module 1002 is configured to, in response to a first trigger operation applied in the topic interface, adjust a size range of the associated area and adjust a number of the target content item displayed in the associated area and/or a display form of the target content item.

In the display apparatus of target content provided by the embodiment, by a topic interface display module, a topic interface of a target topic is displayed and at least one associated user identifier of the target topic is displayed in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or first interaction information of the target post information; and by an adjustment module, in response to a first trigger operation applied in the topic interface, a size range of the associated area is adjusted and a number of the target content item displayed in the associated area and/or a display form of the target content item are adjusted. In the above technical solution of the embodiment, the size range of the associated area and the number and/or display form of the target content item displayed in the associated area are adjusted based on the trigger operation of the user so as to enrich the interaction way of the topic interface, enrich the display way of the target content, and meet the different viewing requirements of users.

In the above solution, the adjustment module 1002 may be configured to adjust a size of an associated user identifier in the at least one associated user identifier and the size range of the associated area, and adjust a number of a target posted content item displayed in the associated area and/or the display form of the target content item according to the size range of the associated area.

In some embodiments, the display apparatus of target content provided in the embodiment may further comprise: a details interface display module configured to, after the at least one associated user identifier of the target topic is displayed in the topic interface, in response to a second trigger operation for an associated user identifier in the at least one associated user identifier, display a preset details interface of an associated user corresponding to the second trigger operation, wherein the preset details interface is configured to display the target post information posted by the associated user corresponding to the second trigger operation in the target topic.

In the above solution, the preset details interface may be further configured to display an associated user list of the target topic and/or second interaction information of the target post information.

In the above solution, the second interaction information of the target post information may comprise textual interaction information and/or emoji interaction information for the target post information.

In some embodiments, the display apparatus of target content provided in the embodiment may further comprise: a details interface switching module configured to, after the preset details interface of the target user corresponding to the second trigger operation is displayed, switch the preset details interface currently displayed in response to a details interface switching operation, wherein different preset details interfaces correspond to different associated users of the target topic.

In the above solution, the at least one associated user identifier may further comprise a current user identifier, wherein the current user identifier is a user identifier of a current user.

In some embodiments, the display apparatus of target content provided in the embodiment may further comprise: an area display module configured to, after the at least one associated user identifier of the target topic is displayed in the topic interface, display a post information generation area in response to a third trigger operation for the current user identifier, wherein the post information generation area is configured for the current user to generate post information for the target topic; and an information posting module configured to post the post information generated in the information input area under the target topic in response to an information posting operation.

In some embodiments, the display apparatus of target content provided in the embodiment may further comprise: an attribute switching module configured to, after displaying the topic interface of the target topic, in response to an attribute switching operation for the current user identifier, switch the current user identifier from a non-public status to a public status, or switch the current user identifier from a public status to a non-public status.

In the above solution, an associated user identifier in the at least one associated user identifier may be a dynamic identifier, and an action performed by the dynamic identifier may correspond to first status information of an associated user corresponding to the dynamic identifier.

The display apparatus of target content provided in the embodiment can perform the display method of target content provided in any embodiment of the present disclosure, and has corresponding functional modules to implement the display method of target content and achieve the beneficial effects. For technical details not described in detail in the embodiment, reference can be made to the display method of target content provided in any embodiment of the present disclosure.

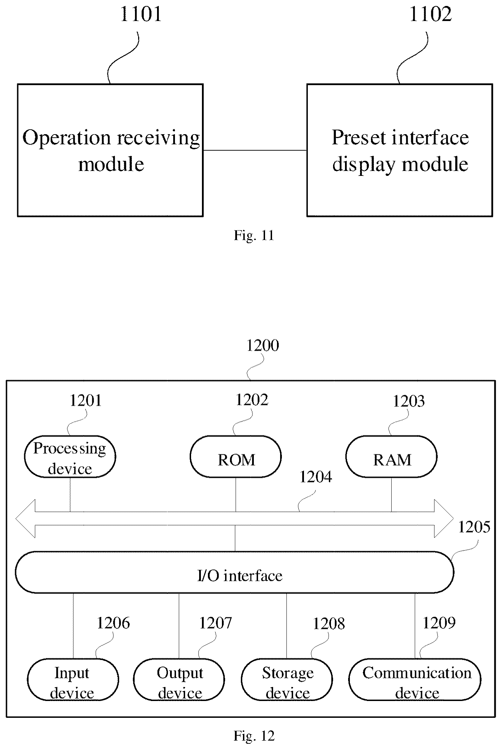

FIG. 11 is a block diagram of a display apparatus of an interface provided in an embodiment of the present disclosure. The apparatus may be implemented in software and/or hardware, and may be provided in an electronic device, typically in a mobile phone or tablet computer, which is suitable for displaying a topic element and/or a virtual character by performing a display method of an interface. As shown in FIG. 11, the display apparatus of the interface provided in the embodiment may comprise: an operation receiving module 1101 and a preset interface display module 1201.

The operation receiving module 1101 is configured to receive an interface display operation for a preset interface.

The preset interface display module 1201 is configured to display the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

In the display apparatus of the interface provided in the embodiment, by the operation receiving module, an interface display operation for a preset interface is received; by a preset interface display module, the preset interface is displayed in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user. In the embodiment, by adopting the above technical solution, at least one topic element configured for triggering entry into a topic interface of a corresponding topic is displayed in the first area of the preset interface, and/or the target space is displayed in the second area of the preset interface, which not only enriches the way of entering a topic interface, but also enriches the way of displaying topics and virtual characters, thereby providing convenience for users to interact based on the virtual characters.

In the above solution, topic elements corresponding to different topics may have different display styles; and/or topic elements corresponding to different types of topics may have different display styles.

In the above solution, the at least one virtual character may present a pose corresponding to second status information of a user corresponding to the at least one virtual character in the target space.

In some embodiments, the display apparatus of the interface provided in the embodiment may further comprise: an addition module configured to add a virtual character of a first user to the target space in response to a virtual character addition operation, wherein the first user is a user corresponding to the virtual character addition operation; and a removal module configured to remove a virtual character of a second user from the target space in response to a virtual character removal operation, wherein the second user is a user corresponding to the virtual character removal operation.

In some embodiments, the display apparatus of the interface provided in the embodiment may further comprise at least one of: an information sending module configured to, after the preset interface is displayed, send preset chat information to a third user corresponding to a first virtual character in response to a chat operation for the first virtual character; a media content generation module configured to, after the preset interface is displayed, generate target media content in response to a media content generation operation for a second virtual character, wherein the target media content displays an image of the second virtual character; an attribute copying module configured to, after the preset interface is displayed, set a virtual character of the current user to have same target attribute information as a third virtual character in response to an attribute copying operation for a preset attribute of the third virtual character, wherein the target attribute information is attribute information of the preset attribute and comprises clothing information; or an attribute saving module configured to, after the preset interface is displayed, save target attribute information of a fourth virtual character in response to an attribute saving operation for a preset attribute of the fourth virtual character, wherein the fourth virtual character is a virtual character of the associated user.

In the above solution, the interface display operation may be applied in a personal interface of the current user.

The display apparatus of the interface provided in the embodiment can perform the display method of the interface provided in any embodiment of the present disclosure, and has corresponding functional modules to implement the display method of the interface and achieve the beneficial effects. For technical details not described in detail in the embodiment, reference can be made to the display method of the interface provided in any embodiment of the present disclosure.

Referring now to FIG. 12, a structural diagram of an electronic device (such as a terminal device) 1200 suitable for implementing the embodiments of the present disclosure is shown. The terminal device of the embodiment of the present disclosure may comprise, but not limited to, a mobile terminal such as a mobile phone, a notebook computer, a digital broadcast receiver, a PDA (Personal Digital Assistant), a PAD (tablet computer), a PMP (Portable Multimedia Player), an on-board terminal (such as an on-board navigation terminal), and a fixed terminal such as a digital TV, a desktop computer, and the like. The electronic device shown in FIG. 12 is merely an example and should not impose any limitation on the function and scope of the embodiments of the present disclosure.

As shown in FIG. 12, the electronic device 1200 may comprise a processing device (e.g., a central processing unit, a graphics processor) 1201, which may perform various appropriate actions and processes according to a program stored in Read Only Memory (ROM) 1202 or a program loaded from storage device 1208 into Random Access Memory (RAM) 1203. In RAM 1203, various programs and data required for the operation of the electronic device 1200 are also stored. The processing device 1201, ROM 1202, and RAM 1203 are connected to each other through a bus 1204. An input/output (I/O) interface 1205 is also connected to the bus 1204.

Generally, the following devices can be connected to the I/O interface 1205: an input device 1206 comprising, for example, a touch screen, a touch pad, a keyboard, a mouse, a camera, a microphone, an accelerometer, a gyroscope, etc.; an output device 1207 comprising a liquid crystal display (LCD), a speaker, a vibrator, etc.; a storage device 1208 such as a magnetic tape, a hard disk, etc.; and a communication device 1209. The communication device 1209 enables the electronic device 1200 to communicate in a wireless or wired manner with other devices to exchange data. Although FIG. 12 shows the electronic device 1200 with various devices, it should be understood that it is not required to implement or have all of these devices. Alternatively, more or fewer devices can be implemented or provided.

In particular, according to an embodiment of the present disclosure, the processes described above with reference to the flowchart can be implemented as a computer software program. For example, an embodiment of the present disclosure comprises a computer program product, which comprises a computer program carried on a non-transitory computer readable medium, and containing program code for executing the method shown in the flowchart. In such an embodiment, the computer program may be downloaded and installed from the network through the communication device 1209, or installed from the storage device 1208, or from the ROM 1202. When the computer program is executed by the processing device 1201, the above functions defined in the method of the embodiment of the present disclosure are performed.

It should be noted that the computer readable medium in the present disclosure may be a computer readable signal medium or a computer readable storage medium, or any combination of thereof. The computer readable storage medium can be, for example, but not limited to, an electronic, magnetic, optical, electromagnetic, infrared, or semiconductor system, apparatus, or device, or any combination of the above. More specific examples of the computer readable storage medium may comprise, but are not limited to: electrical connection with one or more wires, portable computer disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing. In the present disclosure, a computer readable storage medium can be any tangible medium that can contain or store a program, which can be used by or in connection with an instruction execution system, apparatus or device. In the present disclosure, a computer readable signal medium may comprise a data signal that is propagated in the baseband or as part of a carrier, carrying computer readable program code. Such propagated data signals can take a variety of forms comprising, but not limited to, electromagnetic signals, optical signals, or any suitable combination of the foregoing. The computer readable signal medium can also be any computer readable medium other than a computer readable storage medium, which can transmit, propagate, or transport a program for use by or in connection with the instruction execution system, apparatus, or device. Program code embodied on a computer readable medium can be transmitted by any suitable medium, comprising but not limited to wire, fiber optic cable, RF (radio frequency), etc., or any suitable combination of the foregoing.

In some embodiments, a client and a server can communicate using any currently known or future developed network protocol such as HTTP (HyperText Transfer Protocol), and can be interconnected by any form or medium of digital data communication, e.g., a communication network. Examples of communication networks comprise a local area network ("LAN") and a wide area network ("WAN"), the Internet, and end-to-end networks (for example, ad hoc end-to-end networks), as well as any currently known or future developed networks.

The above computer readable medium may be comprised in the electronic device described above; or it may exist alone without being assembled into the electronic device.

The computer readable medium carries one or more programs that, when executed by the electronic device, cause the electronic device to: display a topic interface of a target topic and display at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or first interaction information of the target post information; and in response to a first trigger operation applied in the topic interface, adjust a size range of the associated area and adjust a number of the target content item displayed in the associated area and/or a display form of the target content item; or receive an interface display operation for a preset interface; and display the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

The computer program code for executing operations of the present disclosure may be written in one or more program design languages or a combination thereof, the program design languages comprising, but not limited to, object-oriented program design languages, such as Java, Smalltalk, C++, as well as conventional procedural program design languages, such as "C" program design language or similar program design language. A program code may be completely or partly executed on a user computer, or executed as an independent software package, partly executed on the user computer and partly executed on a remote computer, or completely executed on a remote computer or server. In the case involving a remote computer, the remote computer may be connected to the user computer through various kinds of networks, comprising local area network (LAN) or wide area network (WAN), or connected to external computer (for example using an internet service provider via Internet).

The flowcharts and block diagrams in the drawings illustrate the architecture, functions and operations of possible implementations of systems, methods and computer program products according to various embodiments of the present disclosure. In this regard, each block in the flowchart or block diagrams may represent a module, segment, or portion of code, which comprises one or more executable instructions for implementing the specified logical functions. It should also be noted that, in some alternative implementations, the functions noted in the block may occur out of the order noted in the drawings. For example, two blocks shown in succession may be executed substantially in parallel, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units involved in the embodiments described in the present disclosure can be implemented in software or hardware. Names of the modules do not constitute a limitation on the modules themselves under certain circumstances.

The functions described above may be performed at least in part by one or more hardware logic components. For example, without limitation, exemplary types of hardware logic components that can be used comprise: Field Programmable Gate Array (FPGA), Application Specific Integrated Circuit (ASIC), Application Specific Standard Product (ASSP), System on Chip (SOC), Complex Programmable Logic Device (CPLD), etc.

In the context of the present disclosure, a machine-readable medium may be a tangible medium, which may contain or store a program for use by or in connection with an instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus, or device, or any suitable combination of thereof. More specific examples of the machine-readable storage medium may comprise electrical connection with one or more wires, portable computer disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing.

According to one or more embodiments of the present disclosure, Example 1 provides a display method of target content, comprising: displaying a topic interface of a target topic and displaying at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or first interaction information of the target post information; and in response to a first trigger operation applied in the topic interface, adjusting a size range of the associated area and adjusting a number of the target content item displayed in the associated area and/or a display form of the target content item.

According to one or more embodiments of the present disclosure, in Example 2 according to the method of Example 1, the adjusting of the size range of the associated area and the adjusting the number of the target content item displayed in the associated area and/or the display form of the target content item comprise: adjusting a size of an associated user identifier in the at least one associated user identifier and the size range of the associated area, and adjusting a number of a target posted content item displayed in the associated area and/or the display form of the target content item according to the size range of the associated area.

According to one or more embodiments of the present disclosure, in Example 3 according to the method of Example 1, the method further comprises: after the at least one associated user identifier of the target topic is displayed in the topic interface, in response to a second trigger operation for an associated user identifier in the at least one associated user identifier, displaying a preset details interface of an associated user corresponding to the second trigger operation, wherein the preset details interface is configured to display the target post information posted by the associated user corresponding to the second trigger operation in the target topic.

According to one or more embodiments of the present disclosure, in Example 4 according to the method of Example 3, the preset details interface is further configured to display an associated user list of the target topic and/or second interaction information of the target post information.

According to one or more embodiments of the present disclosure, in Example 5 according to the method of Example 4, the second interaction information of the target post information comprises textual interaction information and/or emoji interaction information for the target post information.

According to one or more embodiments of the present disclosure, in Example 6 according to the method of Example 3, the method further comprises: after the preset details interface of the target user corresponding to the second trigger operation is displayed, switching the preset details interface currently displayed in response to a details interface switching operation, wherein different preset details interfaces correspond to different associated users of the target topic.

According to one or more embodiments of the present disclosure, in Example 7 according to the method of Example 1, the at least one associated user identifier further comprises a current user identifier, wherein the current user identifier is a user identifier of a current user.

According to one or more embodiments of the present disclosure, in Example 8 according to the method of Example 7, the method further comprises: after the at least one associated user identifier of the target topic is displayed in the topic interface, displaying a post information generation area in response to a third trigger operation for the current user identifier, wherein the post information generation area is configured for the current user to generate post information for the target topic; and posting the post information generated in the information input area under the target topic in response to an information posting operation.

According to one or more embodiments of the present disclosure, in Example 9 according to the method of Example 7, the method further comprises, after displaying the topic interface of the target topic: in response to an attribute switching operation for the current user identifier, switching the current user identifier from a non-public status to a public status, or switching the current user identifier from a public status to a non-public status.

According to one or more embodiments of the present disclosure, in Example 10 according to the method of any one of Examples 1 to 9, an associated user identifier in the at least one associated user identifier is a dynamic identifier, and an action performed by the dynamic identifier corresponds to first status information of an associated user corresponding to the dynamic identifier.

According to one or more embodiments of the present disclosure, Example 11 provides a display method of an interface, comprising: receiving an interface display operation for a preset interface; and displaying the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

According to one or more embodiments of the present disclosure, in Example 12 of the method according to Example 11, topic elements corresponding to different topics have different display styles; and/or topic elements corresponding to different types of topics have different display styles.

According to one or more embodiments of the present disclosure, in Example 13 according to the method of Example 11, the at least one virtual character presents a pose corresponding to second status information of a user corresponding to the at least one virtual character in the target space.

According to one or more embodiments of the present disclosure, in Example 14 according to the method of Example 11, the method further comprises at least one of: adding a virtual character of a first user to the target space in response to a virtual character addition operation, wherein the first user is a user corresponding to the virtual character addition operation; or removing a virtual character of a second user from the target space in response to a virtual character removal operation, wherein the second user is a user corresponding to the virtual character removal operation.

According to one or more embodiments of the present disclosure, in Example 15 according to the method of Example 11, after displaying the preset interface, the display method further comprises at least one of: sending preset chat information to a third user corresponding to a first virtual character in response to a chat operation for the first virtual character; generating target media content in response to a media content generation operation for a second virtual character, wherein the target media content displays an image of the second virtual character; setting a virtual character of the current user to have same target attribute information as a third virtual character in response to an attribute copying operation for a preset attribute of the third virtual character, wherein the target attribute information is attribute information of the preset attribute and comprises clothing information; or saving target attribute information of a fourth virtual character in response to an attribute saving operation for a preset attribute of the fourth virtual character, wherein the fourth virtual character is a virtual character of the associated user.

According to one or more embodiments of the present disclosure, in Example 16 according to the method of any one of Examples 11 to 15, the interface display operation is applied in a personal interface of the current user.

According to one or more embodiments of the present disclosure, Example 17 provides a display apparatus of target content, comprising: a topic interface display module configured to display a topic interface of a target topic and display at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or interaction information of the target post information; and an adjustment module configured to, in response to a first trigger operation applied in the topic interface, adjust a size range of the associated area and adjust a number of the target content item displayed in the associated area and/or a display form of the target content item.

According to one or more embodiments of the present disclosure, Example 18 provides a display apparatus of an interface, comprising: an operation receiving module configured to receive an interface display operation for a preset interface; and a preset interface display module configured to display the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

According to one or more embodiments of the present disclosure, Example 19 provides an electronic device, comprising: one or more processors; and a memory for storing one or more programs that, when executed by the one or more processors, cause the one or more processors to implement the display method of the target content provided in any one of Examples 1 to 10 or the display method of the interface provided in any one of Examples 11 to 16.

According to one or more embodiments of the present disclosure, Example 20 provides a computer-readable storage medium stored thereon a computer program that, when executed by a processor, implement the display method of the target content provided in any one of Examples 1 to 10 or the display method of the interface provided in any one of Examples 11 to 16.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the disclosed concept, for example, technical solutions formed by replacing the above features with technical features having similar functions to (but not limited to) those disclosed in the present disclosure.

In addition, although the operations are depicted in a specific order, this should not be understood as requiring these operations to be performed in the specific order shown or performed in a sequential order. Under certain circumstances, multitasking and parallel processing may be advantageous. Likewise, although several specific implementation details are comprised in the above discussion, these should not be construed as limiting the scope of the present disclosure. Certain features that are described in the context of separate embodiments can also be implemented in combination in a single embodiment. Conversely, various features described in the context of a single embodiment can also be implemented in multiple embodiments individually or in any suitable sub-combination.

Although the topic matter has been described in language specific to structural features and/or logical actions of the method, it should be understood that the topic matter defined in the appended claims is not necessarily limited to the specific features or actions described above. On the contrary, the specific features and actions described above are merely exemplary forms of implementing the claims.

## Claims

1. A display method of target content, comprising:
displaying a topic interface of a target topic and displaying at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or first interaction information of the target post information; and
in response to a first trigger operation applied in the topic interface, adjusting a size range of the associated area and adjusting a number of the target content item displayed in the associated area and/or a display form of the target content item.

2. The display method according to claim 1, wherein the adjusting of the size range of the associated area and the adjusting the number of the target content item displayed in the associated area and/or the display form of the target content item comprise:
adjusting a size of an associated user identifier in the at least one associated user identifier and the size range of the associated area, and adjusting a number of a target posted content item displayed in the associated area and/or the display form of the target content item according to the size range of the associated area.

3. The display method according to claim 1 or 2, further comprising:
after the at least one associated user identifier of the target topic is displayed in the topic interface, in response to a second trigger operation for an associated user identifier in the at least one associated user identifier, displaying a preset details interface of an associated user corresponding to the second trigger operation, wherein the preset details interface is configured to display the target post information posted by the associated user corresponding to the second trigger operation in the target topic.

4. The display method according to claim 3, wherein the preset details interface is further configured to display an associated user list of the target topic and/or second interaction information of the target post information.

5. The display method according to claim 4, wherein the second interaction information of the target post information comprises textual interaction information and/or emoji interaction information for the target post information.

6. The display method according to any one of claims 3 to 5, further comprising:
after the preset details interface of the target user corresponding to the second trigger operation is displayed, switching the preset details interface currently displayed in response to a details interface switching operation, wherein different preset details interfaces correspond to different associated users of the target topic.

7. The display method according to any one of claims 1 to 6, wherein the at least one associated user identifier further comprises a current user identifier, wherein the current user identifier is a user identifier of a current user.

8. The display method according to claim 7, further comprising:
after the at least one associated user identifier of the target topic is displayed in the topic interface, displaying a post information generation area in response to a third trigger operation for the current user identifier, wherein the post information generation area is configured for the current user to generate post information for the target topic; and
posting the post information generated in the information input area under the target topic in response to an information posting operation.

9. The display method according to claim 7 or 8, further comprising, after displaying the topic interface of the target topic:
in response to an attribute switching operation for the current user identifier, switching the current user identifier from a non-public status to a public status, or switching the current user identifier from a public status to a non-public status.

10. The display method according to any one of claims 1 to 9, wherein an associated user identifier in the at least one associated user identifier is a dynamic identifier, and an action performed by the dynamic identifier corresponds to first status information of an associated user corresponding to the dynamic identifier.

11. A display method of an interface, comprising:
receiving an interface display operation for a preset interface; and
displaying the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

12. The display method according to claim 11, wherein:
topic elements corresponding to different topics have different display styles; and/or
topic elements corresponding to different types of topics have different display styles.

13. The display method according to claim 11 or 12, wherein the at least one virtual character presents a pose corresponding to second status information of a user corresponding to the at least one virtual character in the target space.

14. The display method according to any one of claims 11 to 13, further comprising at least one of:
adding a virtual character of a first user to the target space in response to a virtual character addition operation, wherein the first user is a user corresponding to the virtual character addition operation; or
removing a virtual character of a second user from the target space in response to a virtual character removal operation, wherein the second user is a user corresponding to the virtual character removal operation.

15. The display method according to any one of claims 11 to 14, wherein after displaying the preset interface, the display method further comprises at least one of:
sending preset chat information to a third user corresponding to a first virtual character in response to a chat operation for the first virtual character;
generating target media content in response to a media content generation operation for a second virtual character, wherein the target media content displays an image of the second virtual character;
setting a virtual character of the current user to have same target attribute information as a third virtual character in response to an attribute copying operation for a preset attribute of the third virtual character, wherein the target attribute information is attribute information of the preset attribute and comprises clothing information; or
saving target attribute information of a fourth virtual character in response to an attribute saving operation for a preset attribute of the fourth virtual character, wherein the fourth virtual character is a virtual character of the associated user.

16. The display method according to any one of claims 11 to 15, wherein the interface display operation is applied in a personal interface of the current user.

17. A display apparatus of target content, comprising:
a topic interface display module configured to display a topic interface of a target topic and display at least one associated user identifier of the target topic in the topic interface, wherein the at least one associated user identifier is arranged in a preset layout, the at least one associated user identifier comprises target user identifiers, an associated area of each of at least part of the target user identifiers displays a target content item of a target user corresponding to the each of the at least part of the target user identifiers, wherein the target content item comprises at least part of information content of target post information corresponding to the target user and/or interaction information of the target post information; and
an adjustment module configured to, in response to a first trigger operation applied in the topic interface, adjust a size range of the associated area and adjust a number of the target content item displayed in the associated area and/or a display form of the target content item.

18. A display apparatus of an interface, comprising:
an operation receiving module configured to receive an interface display operation for a preset interface; and
a preset interface display module configured to display the preset interface in response to the interface display operation, wherein the preset interface comprises a first area and/or a second area, wherein the first area is configured to display a topic element corresponding to at least one topic, the topic element is configured to trigger display of a topic interface of a topic corresponding to the topic element, and the second area is configured to display a target space, wherein at least one virtual character is displayed in the target space, and the at least one virtual character comprises a virtual character of a current user and/or a virtual character of an associated user of the current user.

19. An electronic device, comprising:
at least one processor; and
a memory coupled in communication with the at least one processor, wherein the memory stores a computer program executable by the at least one processor, wherein the computer program, when executed by the at least one processor, causes the at least one processor to perform the display method of the target content according to any one of claims 1 to 10 or the display method of the interface according to any one of claims 11 to 16.

20. A computer-readable storage medium stored thereon computer instructions that, when executed by a processor, implement the display method of the target content according to any one of claims 1 to 10 or the display method of the interface according to any one of claims 11 to 16.

21. A computer program, comprising:
instructions that, when executed by a processor, implement the display method according to any one of claims 1 to 16.

22. A computer program product, comprising:
instructions that, when executed by a processor, implement the display method according to any one of claims 1 to 16.
